# EUROPÄISCHE PATENTSCHRIFT

(11) **EP 1 004 231 B1**
(45) Veröffentlichungstag und Bekanntmachung des Hinweises auf die Patenterteilung: **06.04.2005**
(21) Anmeldenummer: 99123061.6
(22) Anmeldetag: 20.11.1999
(51) Int. Cl.: A01B 63/12

(54) **Dreipunktaufhängung für einen Traktor, Schlepper oder dergleichen**
Three-point hitch for tractor or the like
Accouplage trois points pour tracteur ou similaire

(30) Priorität: 25.11.1998 DE 19854315
(43) Veröffentlichungstag der Anmeldung: 31.05.2000
(73) Patentinhaber: Cramer Kupplung GmbH & Co. KG, 45356 Essen (DE)
(72) Erfinder: Staude, Rudolf, Dr.-Dipl.-Ing., 42111 Wuppertal (DE)
(74) Vertreter: Honke, Manfred, Dr.-Ing.

(56) Entgegenhaltungen:
- EP-A- 0 199 977
- EP-A- 0 294 509
- DE-B- 1 004 409
- US-A- 3 432 184
- US-A- 3 561 789
- US-A- 5 466 083

## Beschreibung

Die Erfindung betrifft eine Dreipunktaufhängung, gemäß Oberbegriff des Anspruchs 1, für einen Traktor, Schlepper oder dergleichen, zum Heben, Senken und/oder Schwenken von zumindest einem am Traktorheck und/oder an der Traktorfront angeordneten Arbeitsgerät, mit zumindest einem an einem traktorseitigen unteren Anlenkpunkt schwenkbar angelenkten Unterlenker und zumindest einem an einem traktorseitigen oberen Anlenkpunkt schwenkbar angelenkten Oberlenker, wobei der Unterlenker geräteseitig einen unteren Kupplungspunkt und der Oberlenker geräteseitig einen oberen Kupplungspunkt für den Anschluß des Arbeitsgerätes aufweist. - Arbeitsgerät meint im Rahmen der Erfindung landwirtschaftliche Geräte oder Maschinen zur Bodenbearbeitung, Düngung oder dergleichen, beispielsweise einen Pflug, eine Egge, eine Düngerstreuer oder eine Drillmaschine. Über die Dreipunktaufhängung erfolgt der Anschluß der Arbeitsgeräte an den Traktor, wobei zugleich die Anpassung der Arbeitshöhe erfolgt. Dazu sind zumeist Hydraulikantriebe verwirklicht, mit welchen der Unterlenker verschwenkt wird. Der Oberlenker ist zumeist in passiver Weise mit dem Arbeitsgerät verbunden. Bei modernen Traktoren ist das Hydrauliksystem heute als Regelhydrauliksystem ausgebildet. So läßt sich beispielsweise die Arbeitshöhe des Arbeitsgerätes bei Bodenunebenheiten konstant halten. Dazu sind die Hydraulikantriebe regelmäßig mit ein oder mehreren Hydraulikzylindern versehen, die über ein oder mehrere Hubstangen auf den Unterlenker wirken. Derartige Aufhängungen sind konstruktions- und kostenaufwendig, insbesondere weil die Hydraulikzylinder und die Hubstangen sehr viel Raum im Traktorheck erfordern. Außerdem ist die Verwendung von Hydraulikantrieben aus Umweltschutzgründen unbefriedigend. Es besteht die Gefahr, daß bei Funktionsstörungen Hydrauliköl austritt. Dementsprechend ist der Wartungsaufwand für derartige Systeme erheblich. - Hier setzt die Erfindung ein.

Der Erfindung liegt die Aufgabe zugrunde eine Dreipunktaufhängung der eingangs beschriebenen Ausführungsform zu schaffen, die einfach und funktionsgerecht aufgebaut ist und bei der eine Umweltverschmutzung und insbesondere Bodenverschmutzung durch Hydrauliköl nicht zu befürchten ist.

Zur Lösung dieser Aufgabe lehrt die Erfindung die technischen Merkmale wie beansprucht. Die Erfindung geht von der Erkenntnis aus, daß auf einen Hydraulikantrieb vollständig verzichtet werden kann, wenn elektromotorische Antriebsaggregate für die Dreipunktaufhängung vorgesehen sind. Das jeweilige elektromotorische Antriebsaggregat wirkt unter Zwischenschaltung zumindest einer Spindelhubeinrichtung auf den Unterlenker und/oder den Oberlenker. Der Antrieb für die Hub- und Senkbewegungen erfolgt folglich auf elektrischem Wege, so daß die Gefahrenquelle Hydrauliköl vollständig wegfällt. Damit verbunden ist auch ein geringeres Gewicht der Aufhängung, so daß eine geringere Bodenverdichtung bewirkt wird und damit höhere Stütz- bzw. Anhängelasten ermöglicht werden. Die Spindelhubeinrichtungen arbeiten auf Zug und Druck und können mit einer wesentlich kleineren Baulänge als Hydraulikzylinder ausgeführt werden. Kleinere Baulängen erlauben leichtere Integration in die Anhängeböcke. Ferner ist vorgesehen, daß die Spindelhubeinrichtungen mittels eines Kardangelenkes oder eines Kugelgelenkes an dem Unterlenker und/oder dem Oberlenker angelenkt sind. Über entsprechende Stabilisatoren erlauben diese eine starre wie auch eine "schwimmende" Bewegung. Im Bereich des Traktorhecks ist eine Anhängekupplung vorgesehen. Die Anhängekupplung ist ebenfalls mittels eines elektromotorischen Antriebs höhenverstellbar ausgebildet.

Der Aufbau eignet sich für den Anbau an Heck. Das System ist komplett vormontierbar, voreinstellbar und nachrüstbar. Es handelt sich um ein vollständig integriertes System mit verringertem Bauaufwand durch Kombination von Dreipunktaufhängung mit Anhängekupplung und Zugpendel. Durch die neue Kinematik entfällt eine Hubstrebe. Die Lastaufnahme erfolgt durch ziehende elektrisch angetriebene Spindeln. Aufgrund der gewählten Kinematik wird eine lineare oder leicht progressive Hubkraftcharakteristik für Heckkraftgeber ermöglicht. Der Unterlenkerdrehpunkt bleibt am Getriebe erhalten. Eine Anhängekupplung ist höhenverstellbar integriert und das System ist geeignet für kleine und große Lasten. Der Oberlenkerbock ist im Anhängebock integriert. Es sind Einzelantriebe für jede Seite vorgesehen, so daß eine Längsneigungs- und Seitenneigungsjustierung verwirklicht ist. Der Antrieb für alle Hubbewegungen erfolgt diesel-elektrisch, das heißt, daß der elektromotorische Antrieb mit von einem dieselgetriebenen Generator erzeugten Drehstrom gespeist wird. Er treibt über separate Motoren auf beiden Seiten die Hub- bzw. Zugspindeln an. Die Krafteinleitung erfolgt durch "ziehende" Bewegung. Durch Selbsthemmung wird eine große Positionsgenauigkeit erreicht. Über eine elektronische bzw. elektrische Steuerung mit breiten Programmiermöglichkeiten zur Steuerung und Überwachung ist die Anlage individuell den betrieblichen Gegebenheiten gut anpaßbar. Die Kraft- und Lageregelung erfolgt elektronisch bzw. elektrisch.

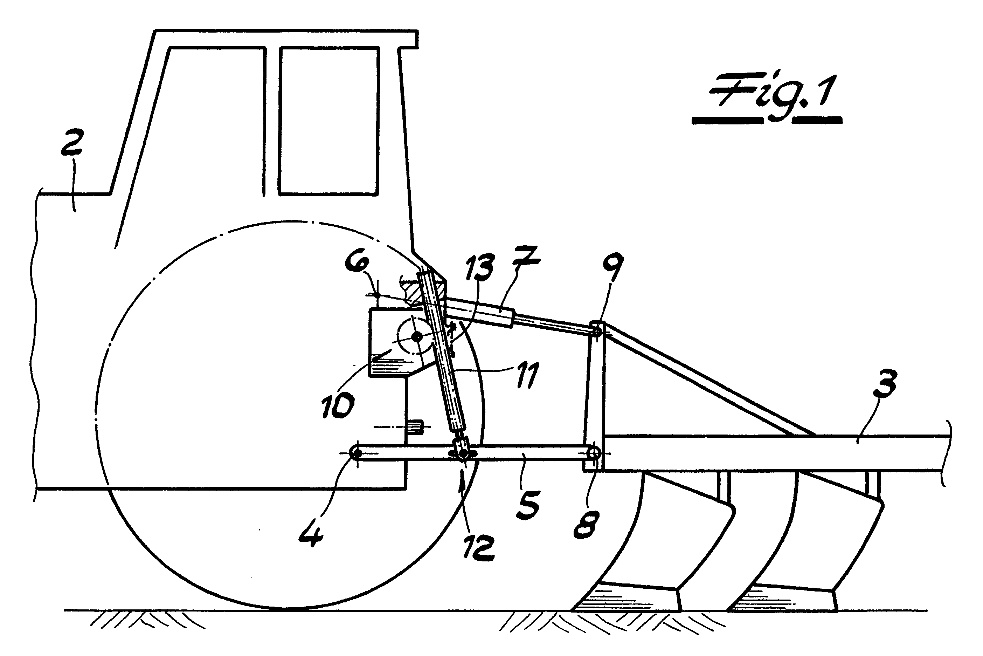

Im folgenden wird die Erfindung anhand einer lediglich ein Ausführungsbeispiel darstellenden Zeichnung näher erläutert. Es zeigen
- Fig. 1: ausschnittsweise einen Traktor mit erfindungsgemäßer Dreipunktaufhängung in schematischer Seitenansicht,
- Fig. 2: die Dreipunktaufhängung in perspektivischer Darstellung,

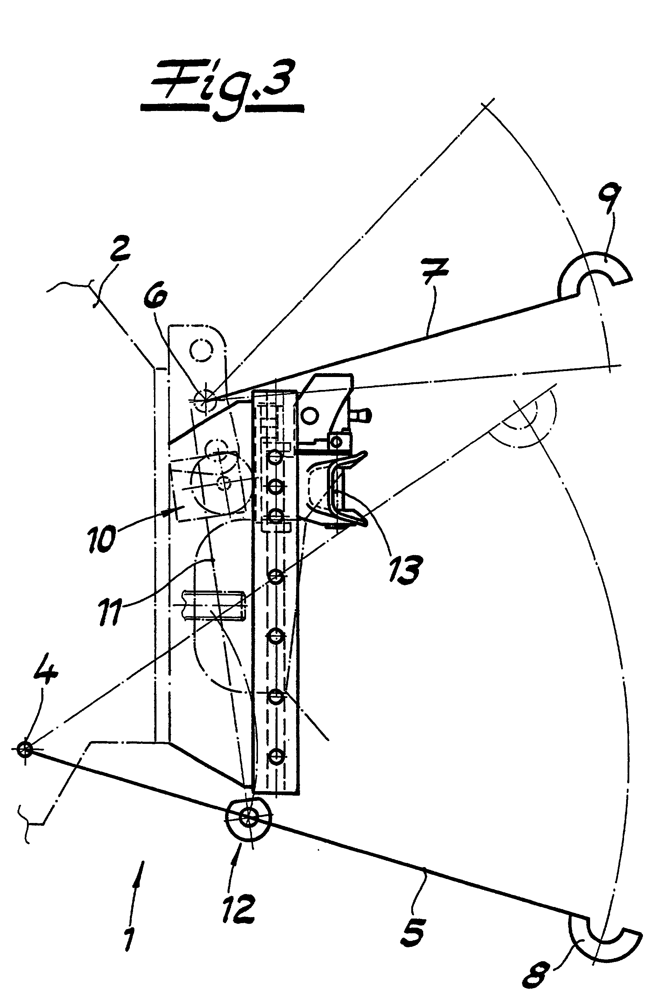

- Fig. 3: eine andere Ausführungsform der Erfindung in einer Seitenansicht,
- Fig. 4: eine abgewandelte Ausführungsform des Gegenstandes nach Figur 1 in Frontansicht,
- Fig. 5: der Gegenstand nach Figur 4 in Draufsicht und
- Fig. 6: den Gegenstand nach Figur 4 in Seitenansicht.

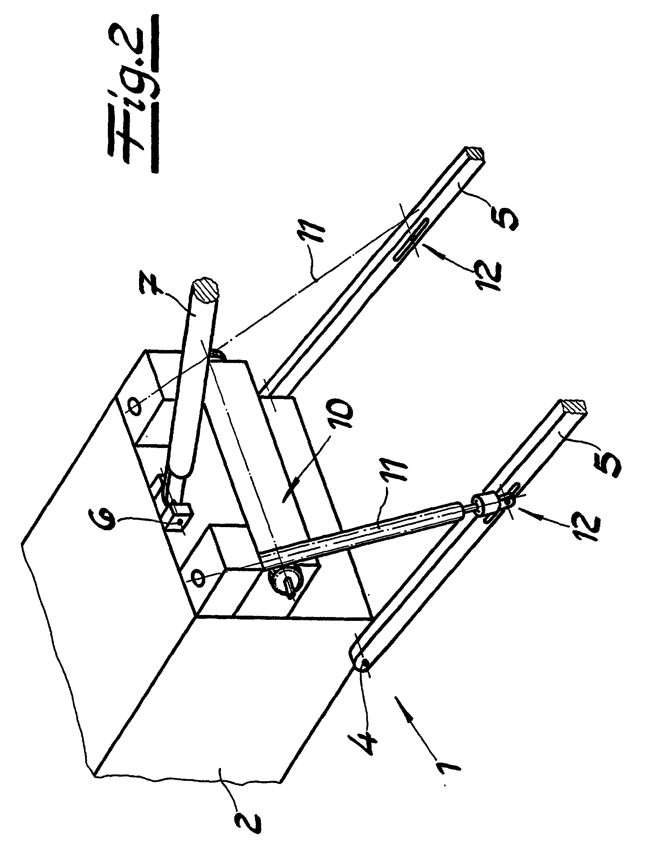

In den Figuren ist eine Dreipunktaufhängung 1 für einen Traktor 2 zum Heben und Senken von einem am Traktorheck angeordneten Arbeitsgerät 3 dargestellt. Traktorseitig sind an unteren Anlenkpunkten 4 Unterlenker 5 schwenkbar angelenkt. Außerdem ist an einem oberen Anlenkpunkt 6 ein Oberlenker 7 schwenkbar angelenkt. Die Unterlenker 5 weisen geräteseitig einen unteren Kupplungspunkt 8 auf und der Oberlenker 7 weist geräteseitig einen oberen Kupplungspunkt 9 auf. Die Kupplungspunkte 8, 9 dienen dem Anschluß des Arbeitsgerätes 3. Die Unterlenker 5 sind zum Heben und Senken mittels eines elektromotorischen Antriebsaggregates 10 schwenkbar. Dabei wirkt das elektromotorische Antriebsaggregat 10 unter Zwischenschaltung jeweils einer Spindelhubeinrichtung 11 auf die Unterlenker 5. Die Spindelhubeinrichtungen 11 sind nach Figur 2 mittels eines Kardangelenkes 12 an dem Unterlenker 5 angelenkt. Im Bereich des Traktorhecks ist außerdem eine Anhängekupplung 13 vorgesehen, die ebenfalls mittels eines elektromotorischen Antriebes höhenverstellbar ausgebildet ist.

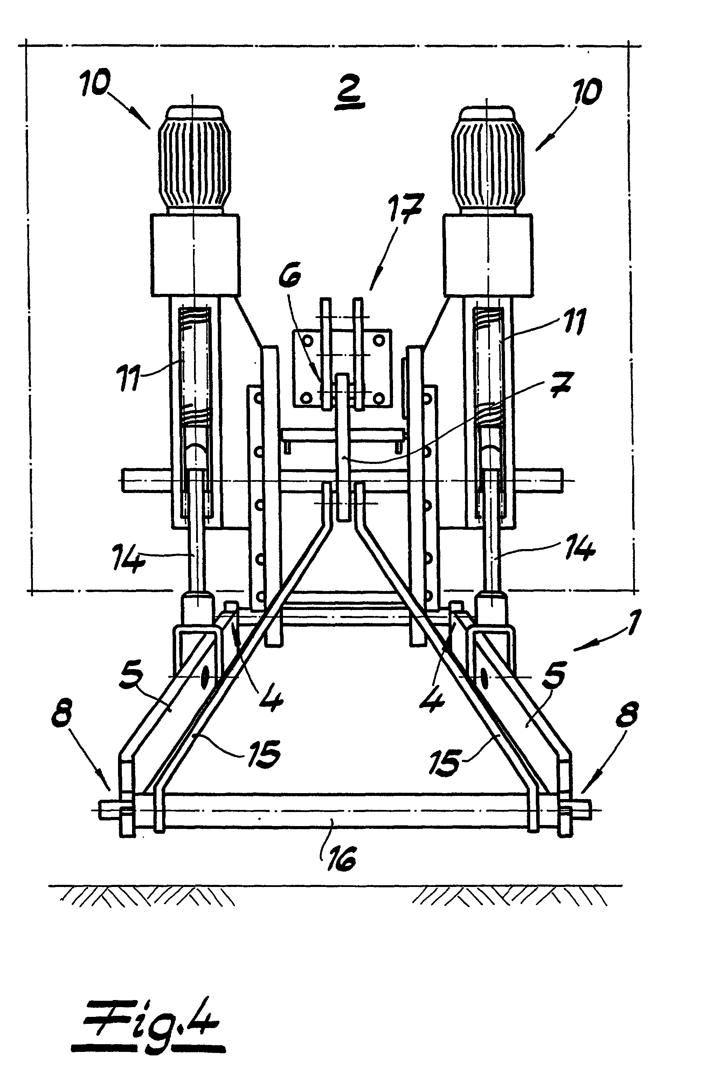

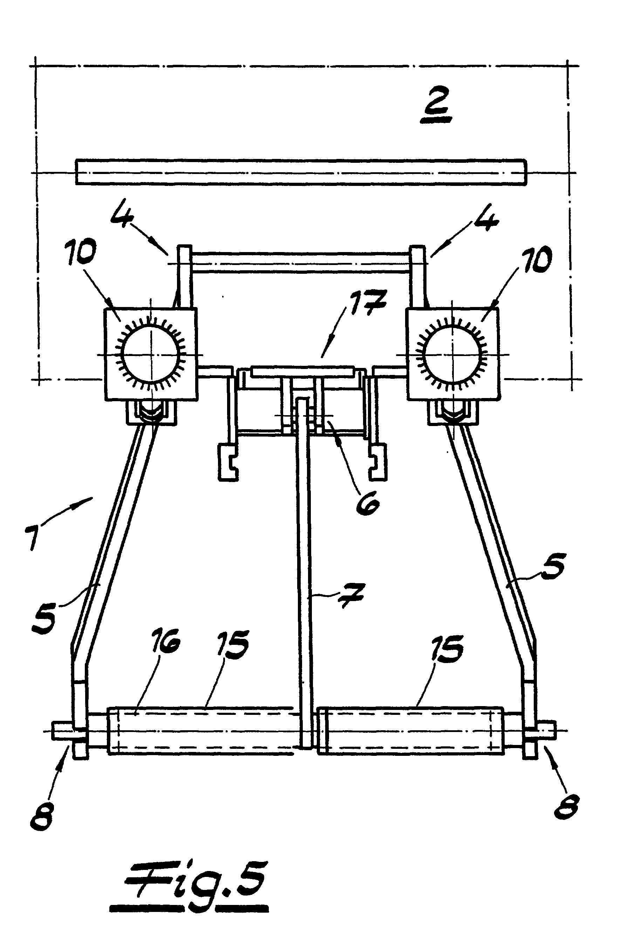

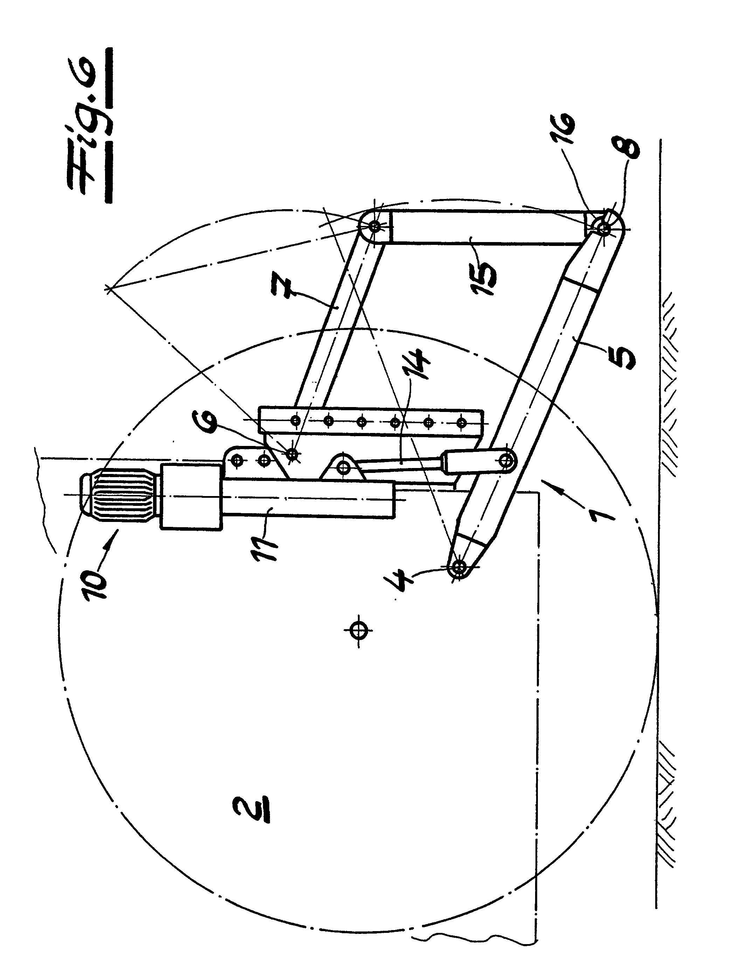

Jedem Unterlenker 5 ist eine eigene Spindelhubeinrichtung 11 zugeordnet. Die Spindelhubeinrichtungen 11 sind jeweils einzeln oder gemeinsam von einem elektromotorischen Antriebsaggregat 10 beaufschlagt. Die Spindelhubeinrichtungen 11 sind bei der Ausführungsform nach den Figuren 4 bis 6 unter Zwischenschaltung von Gelenkstangen 14 an den Unterlenkern 5 angelenkt. Die Gelenkstangen 14 können längenverstellbar sein. Der Oberlenker 7 ist in vertikaler Projektion mittig zwischen beiden Unterlenkern 5 angeordnet und mittels Gabelarmen 15 und einer von den auseinandergespreizten Gabelarmenden getragenen Verbindungsstange 16 endseitig an den Unterlenkern 5 angelenkt.

Die Dreipunktaufhängung 1 ist nach dem erfindungsgemäßen Vorschlag als selbständige Baueinheit ausgebildet und kann auch bei Baumaschinen Verwendung finden. In die Baueinheit sind eine Anhängekupplung 13, ein Zugpendel und gegebenenfalls ein Pick-up-Hitch als Bestandteile der Dreipunktaufhängung 1 integriert. Die Anhängekupplung 13 kann mittels eines elektromotorischen Antriebsaggregates höhenverstellbar sein. Für die elektromotorischen Antriebsaggregate 10 sind ein oder mehrere elektrisch/elektronisch arbeitende Steuerungs- und/oder Regelaggregate vorgesehen. Die elektromotorischen Antriebsaggregate 10 können auch als diesel-elektrische Antriebe arbeiten. Von besonderer Bedeutung ist die Tatsache, daß die elektromotorischen Antriebsaggregate 10 für die Spindelhubeinrichtungen 11 und gegebenenfalls für den Oberlenker 7 und die Anhängekupplung 13 in einen Anhängeblock 17 für die Dreipunktaufhängung 1 integriert sind.

## Patentansprüche

1. Dreipunktaufhängung (1) für einen Traktor (2), schlepper oder dergleichen zum Heben, Senken und/oder Schwenken von zumindest einem am Traktorheck angeordneten Arbeitsgerät (3), mit zumindest einem an einem traktorseitigen unteren Anlenkpunkt (4) schwenkbar angelenkten Unterlenker (5) und zumindest einem an einem traktorseitigen oberen Anlenkpunkt (6) schwenkbar angelenkten Oberlenker (7) und einem Anhängeblock (17), wobei
- der Unterlenker (5) geräteseitig einen unteren Kupplungspunkt (8) und der Oberlenker (7) geräteseitig einen oberen Kupplungspunkt (9) für den Anschluss des Arbeitsgerätes aufweist,
- der Unterlenker (5) und/oder der Oberlenker (7) zum Heben, Senken und/oder Schwenken mittels eines oder mehrerer elektromotorische Antriebaggregate (10) unter Zwischenschaltung zumindest jeweils einer Spindelhubeinrichtung betätigbar sind, **dadurch gekennzeichnet, daß**
- die elektromotorischen Antriebsaggregate (10) für die Spindelhubeinrichtungen (11) und gegebenenfalls für den Oberlenker (7) sowie die Anhängekupplung (13) in dem Anhängeblock (17) für die Dreipunktaufhängung (1) integriert sind.

2. Dreipunktaufhängung nach Anspruch 1, **dadurch gekennzeichnet, dass** die Spindelhubeinrichtungen (11) jeweils unter Zwischenschaltung von Gelenkstangen (14) an den Unterlenkern (5) angelenkt sind.

3. Dreipunktaufhängung nach Anspruch 1 oder 2, **dadurch gekennzeichnet, dass** die Gelenkstangen (14) als längenverstellbare Stangen ausgebildet sind.

4. Dreipunktaufhängung nach einem der Ansprüche 1 bis 3, **dadurch gekennzeichnet, dass** die Dreipunktaufhängung (1) als selbstständige Baueinheit ausgebildet ist und in die Baueinheit eine Anhängekupplung (13), ein Zugpendel und gegebenenfalls ein Pick-up-Hitch als Bestandteile der Dreipunktaufhängung (1) integriert sind.

5. Dreipunktaufhängung nach einem der Ansprüche 1 bis 4, **dadurch gekennzeichnet, dass** für die elektromotorischen Antriebsaggregate (10) ein oder mehrere elektrisch/elektronisch arbeitende Steuerungs- und/oder Regelaggregate vorgesehen sind.

6. Dreipunktaufhängung nach einem der Ansprüche 1 bis 5, **dadurch gekennzeichnet, dass** die elektromotorischen Antriebsaggregate (10) als diesel-elektrische Antriebe arbeiten.

7. Dreipunktaufhängung (1) nach einem der Ansprüche 1 bis 6 zur Verwendung bei Baumaschinen.

## Claims

1. A three-point suspension (1) for a tractor (2), towing vehicle or suchlike for the raising, lowering and/or swivelling of at least one implement (3) arranged at the tractor rear, with at least one lower connecting rod (5) hinged in a swivelling manner at a lower pivotal point (4) on the tractor side and at least one upper connecting rod (7) hinged in a swivelling manner at an upper pivotal point (6) on the tractor side and a trailer block (17), whereby
- the lower connecting rod (5) has a lower coupling point (8) on the implement side and the upper connecting rod (7) has an upper coupling point (9) on the implement side for the connection of the implement,
- the lower connecting rod (5) and/or the upper connecting rod (7) for the raising, lowering and/or swivelling are operable by means of one or more of electric-motor drive units (10) with the interposition of at least one spindle-type lifting mechanism in each case, **characterised in that**
- the electric-motor drive units (10) for the spindle-type lifting mechanisms (11) and, as the case may be, for the upper connecting rod (7) as well as the trailer coupling (13) are integrated in the trailer block (17) for the three-point suspension (1).

2. The three-point suspension according to claim 1, **characterised in that** the spindle-type lifting mechanisms (11) are linked in each case to the lower connecting rods (5) with the interposition of link rods (14).

3. The three-point suspension according to claim 1 or 2, **characterised in that** the link rods (14) are designed as length-adjustable rods.

4. The three-point suspension according to any one of claims 1 to 3, **characterised in that** the three-point suspension (1) is designed as an independent constructional unit and a trailer coupling (13), an adjustable drawbar and, as the case may be, a pick-up-hitch are integrated as components of the three-point suspension (1) into the constructional unit.

5. The three-point suspension according to any one of claims 1 to 4, **characterised in that** one or more electrically/electronically operating control and/or regulating units are provided for the electric-motor drive units (10).

6. The three-point suspension according to any one of claims 1 to 5, **characterised in that** the electric-motor drive units (10) operate as diesel-electric drives.

7. The three-point suspension (1) according to any one of claims 1 to 6 for use in construction machines.

## Revendications

1. Suspension à trois points (1) pour un tracteur (2), un dispositif de remorquage ou similaire pour le levage, l'abaissement et/ou le basculement d'au moins un outil de travail (3) disposé sur l'arrière du tracteur, comprenant au moins une barre de liaison inférieure (5) articulée de façon pivotante sur un point d'articulation (4) inférieur côté tracteur et au moins une barre de liaison supérieure (7) articulée de façon pivotante sur un point d'articulation (6) supérieur côté tracteur et un bloc d'attelage (17), moyennant quoi
- la barre de liaison inférieure (5) présente côté appareil un point d'accouplement (8) inférieur et la barre de liaison supérieure (7) côté appareil un point d'accouplement (9) supérieur pour le raccordement de l'outil de travail,
- la barre de liaison inférieure (5) et/ou la barre de liaison supérieure (7) peuvent être actionnées pour l'élévation, l'abaissement et/ou le basculement au moyen d'un ou de plusieurs ensembles d'entraînement (10) à moteur électrique, avec l'intercalation d'au moins un système de levage à broche, **caractérisé en ce que**
- les ensembles d'entraînement (10) à moteur électrique pour les systèmes de levage à broche (11) et éventuellement pour la barre de liaison supérieure (7) et l'accouplement de remorque (13) sont intégrés dans le bloc d'attelage (17) pour la suspension à trois points.

2. Suspension à trois points selon la revendication 1, **caractérisé en ce que** les systèmes de levage à broche (11) sont articulés sur les barres de liaison inférieures (5) respectivement avec l'intercalation de tiges articulées (14).

3. Suspension à trois points selon la revendication 1 ou 2, **caractérisée en ce que** les tiges articulées (14) sont conçues comme des tiges réglables en longueur.

4. Suspension à trois points selon l'une quelconque des revendications 1 à 3, **caractérisée en ce que** la suspension à trois points (1) est conçue comme un module indépendant et un accouplement de remorque (13), un système oscillant de traction et éventuellement un Pick-up-Hitch sont intégrés dans le module en tant que composants de la suspension à trois points (1).

5. Suspension à trois points selon l'une quelconque des revendications 1 à 4, **caractérisée en ce que** un ou plusieurs ensembles de commande et/ou de réglage travaillant de façon électrique/électronique sont prévus pour les ensembles d'entraînement (10) à moteur électrique.

6. Suspension à trois points selon l'une quelconque des revendications 1 à 5, **caractérisée en ce que** les ensembles d'entraînement (10) à moteur électrique travaillent comme des entraînements diesel-électriques.

7. Suspension à trois points (1) selon l'une quelconque des revendications 1 à 6 pour l'utilisation sur des engins de construction.
